# EUROPÄISCHE PATENTSCHRIFT

(11) **EP 2 313 954 B1**
(45) Veröffentlichungstag und Bekanntmachung des Hinweises auf die Patenterteilung: **18.05.2016**
(21) Anmeldenummer: 09781121.0
(22) Anmeldetag: 27.07.2009
(51) Int. Cl.: H02H 3/33

(54) **VERFAHREN ZUM BETREIBEN EINES FEHLERSTROMSCHUTZSCHALTERS SOWIE FEHLERSTROMSCHUTZSCHALTER**
METHOD FOR OPERATING A FAULT-CURRENT CIRCUIT BREAKER, AND FAULT-CURRENT CIRCUIT BREAKER
PROCÉDÉ DE FONCTIONNEMENT D'UN DISJONCTEUR POUR COURANT DE FUITE ET DISJONCTEUR POUR COURANT DE FUITE

(30) Priorität: 14.08.2008 DE 102008037831
(43) Veröffentlichungstag der Anmeldung: 27.04.2011
(73) Patentinhaber: Siemens Aktiengesellschaft, 80333 München (DE)
(72) Erfinder: HUEBER, Alexander, 84085 Niederleierndorf (DE); SPORRER, Thomas, 95478 Kemnath (DE)
(86) Internationale Anmeldenummer: PCT/EP2009/059658
(87) Internationale Veröffentlichungsnummer: WO 2010/018058

(56) Entgegenhaltungen:
- EP-A- 0 440 835
- DE-A1- 3 642 393
- US-A- 4 280 162

## Beschreibung

Die Erfindung betrifft ein Verfahren zum Betreiben eines Fehlerstromschutzschalters nach dem Oberbegriff von Patentanspruch 1 sowie einen Fehlerstromschutzschalter nach dem Oberbegriff von Patentanspruch 6.

Ein solches Verfahren und ein solcher Fehlerstromschutzschalter sind aus der DE 36 42 393 A1 bekannt, wobei diese sich ihrerseits auf die DE-A-3424959 stützt.

Der gattungsgemäße Fehlerstromschutzschalter weist mehrere Paare von Anschlüssen für Netzleitungen auf, nämlich zwei Paare bei einem einphasigen und vier Paare bei einem dreiphasigen System, und diese Anschlüsse sind jeweils über einen Primärleiter miteinander verbunden, und in den Primärleitern sind Schalter zum Unterbrechen der jeweiligen Verbindung vorgesehen. Alle Primärleiter sind über eine Primärseite eines Summenstromwandlers geführt, wobei sie im Bereich Summenstromwandlers üblicherweise als Primärwicklungen ausgebildet sind. An der Sekundärseite des Summenstromwandlers ist eine Sekundärwicklung bereitgestellt. Die Sekundärwicklung ist mit einem ersten Ende über eine Impedanz mit einem Massenanschluss gekoppelt und mit einem zweiten Ende mit einem Rechteckgenerator gekoppelt. Am ersten Ende ist ein Spannungsabgriff vorgesehen. Im Falle des Schalters aus der DE 36 42 393 A1 ist der Spannungsabgriff zwischen einer Reihenschaltung aus der Sekundärwicklung im engeren Sinne und einem herkömmlichen Widerstand und einem gesonderten Impedanzelement vorgesehen. Vorliegend soll der Begriff der Sekundärwicklung einen solchen herkömmlichen Widerstand mit umfassen dürfen. In diesem Falle ist der Spannungsabgriff auch auf die Impedanz bezogen definierbar, nämlich an einem dem Massenabschluss abgewandten Ende der Impedanz vorgesehen.

In der DE 36 42 393 A1 ist eine sogenannte Transduktorschaltung beschrieben. Durch den Rechteckgenerator wird die Sekundärseite bis nahe an die Sättigungsgrenze eines zum Summenstromwandler gehörenden Magnetkerns wechselmagnetisiert. Wenn durch die Primärwicklungen ein Differenzstrom fließt, wird im Summenstromwandler ein Magnetfeld überlagert, das bei gleicher Richtung mit dem durch die Rechteckpulse des rechteckigen Generators angelegten Feld die Sättigungsgrenze des Wandlers überschreitet. Dann wird der induktive Widerstand der Sekundärwicklung kleiner. In der Impedanz, die in Serienschaltung zur Sekundärwicklung angeordnet ist, steht dann vom Rechteckgenerator ein höheres Potential gegen Bezugspotential an. Der oben genannte Spannungsabgriff dient dazu, genau dies zu erfassen: Er ist mit einer Auswerte- und Steuereinheit gekoppelt, die erfasst, ob eine Schwellspannung (zwischen Potenzialabgriff und Masse) überschritten wird. Ist dies der Fall, wird eine Auslöseeinrichtung aktiviert, die ein Öffnen der Schalter in den Primärleitern bewirkt.

Die DE 36 42 393 A1 befasst sich mit der Ausgestaltung der Auswerte- und Steuereinheit. Es erweist sich nämlich als schwierig, das am Spannungsabgriff anliegende Potential ausreichend genau zu messen.

Die EP 0 005 694 A beschreibt, dass bei einem Fehlerstromschutzschalter ein Kern aus magnetisch leitendem Material eingesetzt werden kann, der aus Band oder Draht gewickelt ist, wobei die Enden dieses Bandes oder Drahts mit einer Wechselstromquelle verbunden sind, und die Selbstinduktionsspannung, die sich an den Enden dieses Bandes oder Drahts einstellt, wird von einer Regelschaltung auf einen Sollwert geregelt.

Ein andere Fehlerstromschutzschalter ist aus EP 0 440 835 bekannt. Es ist Aufgabe der Erfindung, einen Weg aufzuzeigen, wie in unaufwändiger Weise ein Fehlerstromschutzschalter der oben beschriebenen Gattung betrieben werden kann.

Die Aufgabe wird durch ein Verfahren mit den Merkmalen gemäß Patentanspruch 1 und einen Fehlerstromschutzschalter mit den Merkmalen gemäß Patentanspruch 6 gelöst.

Bei dem erfindungsgemäßen Verfahren wird somit die Pulshöhe von Rechtseckspulsen der Rechteckspannung auf einen solchen Wert geregelt, dass die zeitliche Änderung der Stromstärke des von einem Rechteckpuls in der Sekundärwicklung induzierten Stroms während der Dauer eines Rechteckpulses und/oder während der Dauer einer Pulspause zwischen zwei Rechteckpulsen jeweils einen vorbestimmten Wert hat.

Bei bestimmter Dauer der Rechteckpulse bei einer vorbestimmten Frequenz der Rechteckpulsabgabe durch den Rechteckgenerator hat aus diesem Grunde das den Magnetkern des Summenstromwandler durchdringende Magnetfeld stets das gleiche Verhalten und insbesondere dieselbe Amplitude. Während bei dem aus der DE 36 42 393 A1 bekannten Differenzstromschutzschalter ein Differenzstrom bewirkt, dass ein entsprechender Magnetkern weiter in die Sättigung gefahren wird und seine Wirkungen daher mit empfindlichen Methoden nachgewiesen werden müssen, reicht bei der vorliegenden Erfindung bei einem Differenzstrom eine Variation der Pulshöhe der Rechteckpulse für den Nachweis der Wirkungen eines Fehlerstroms aus.

Während im Stand der Technik nur mit empfindlichen Methoden auf die Amplitude eines Fehlerstroms rückzuschließen ist, ist dies bei dem erfindungsgemäßen Verfahren in vereinfachter Weise möglich.

Es gibt mehrere Größen, die beim geregelten Betrieb des Fehlerstromschutzschalters ermittelt werden können und darauf hin ausgewertet werden können, ob aufgrund eines Fehlerstroms die Schalter in den Primärleitungen zu öffnen sind. Bei dem geregelten Verfahren kann in besonders einfacher Weise die an der Sekundärwicklung, insbesondere an der Sekundärwicklung im engeren Sinne, also ohne weitere Widerstandselemente abfallende Spannung gemessen. Die Spannung ist gemäß dem Induktionsgesetz das Produkt aus der Induktivität und der zeitlichen Änderung der Stromstärke. Da nun die Regelung gerade bewirkt, dass die zeitliche Änderung der Stromstärke konstant ist, schlägt sich in der an der Sekundärwicklung gemessenen Spannung eine Änderung der Induktivität proportional in einer Änderung der Spannung nieder. Daher kann aufgrund der gemessenen Spannung unmittelbar auf die Induktivität zurückgeschlossen werden, und aufgrund der Induktivität lässt sich, insbesondere auch besonders gut, wenn der Magnetkern nicht in Sättigung gebracht wird, die Stromstärke eines Fehlerstroms ableiten.

Das erfindungsgemäße Verfahren ist insbesondere allstromsensitiv, es können also sowohl Gleichströme und Pulsströme als auch Wechselströme erfasst werden und ein Auslösen des Fehlerstromschutzschalters bewirken. Damit Wechselströme erfasst werden, sollte die Frequenz der Rechteckspannung, mit der die Rechteckpulse an der Reihenschaltung angelegt werden, zumindest fünfmal so hoch und bevorzugt zumindest zwanzigmal so hoch sein wie eine Netzfrequenz einer über die Netzleitungen bereitgestellten Netzspannung: Bei 50 Hz Netzspannung sollte der Rechteckgenerator eine Frequenz von z.B. mindestens 1kHz abgeben. Ein geeigneter Wert ist 3kHz.

Es sind unterschiedliche Methoden möglich, wie eine Regelung gestaltet werden kann. Bei Beaufschlagung der Reihenschaltung aus Sekundärwicklung und Impedanz mit einer Rechteckspannung zeigt der Strom ein Dreiecksverhalten, wechselt also ständig zwischen konstanter Steigung und konstantem Gefälle, und die an der Impedanz abfallende Spannung sieht entsprechend aus. Wird nun die an der Impedanz abfallende Spannung abgegriffen und mit einer konstanten Spannung verglichen, kann man anhand der Dauer des Überschreitens der konstanten Spannung durch die an der Impedanz abfallende Spannung Abweichungen vom Sollwert für die zeitliche Änderung der Stromstärke erkennen. Diese Dauer des Überschreitens kann somit die Pulshöhe der Rechteckpulse bestimmen. Insbesondere kann auf eine vorbestimmte Dauer des Überschreitens geregelt werden, und dadurch wird unmittelbar auch die zeitliche Änderung der Stromstärke pro Puls bzw. pro Pulspause auf einen vorbestimmten Wert geregelt.

Der erfindungsgemäße Fehlerstromschutzschalter ist dadurch gekennzeichnet, dass die Auswerte- und Steuereinheit mit dem Rechteckgenerator gekoppelt ist, so dass in Abweichung von den Systemen des Standes der Technik ein geschlossenes System gebildet ist. Die Auswerte- und Steuereinheit ist dazu ausgelegt, Steuerbefehle zum Festlegen der Pulshöhe von von dem Rechteckgenerator abgegebenen Rechteckpulsen an diesen abzugeben, wobei der Rechteckgenerator diese Steuerbefehle dann umzusetzen ausgelegt sein muss.

Das oben beschriebene Verfahren, bei dem die an der Impedanz abfallende Spannung mit einer konstanten Spannung verglichen wird, ist durch Verwendung eines Komparators umsetzbar, dem die am ersten Ende abgegriffene Spannung sowie eine konstante Spannung zugeführt wird. Am Ausgang des Komparators werden dann Spannungspulse abgegeben, deren Dauer genau die Dauer des Überschreitens der konstanten Spannung durch die an der Impedanz abgefallene Spannung ist. Werden die Ausgangssignale des Komparators einer Datenverarbeitungseinheit zugeführt, so kann diese die Ausgangssignale auswerten und in Abhängigkeit davon Steuerbefehle an den Rechteckgenerator abgeben. In der Datenverarbeitungseinheit muss lediglich eine Beziehung zwischen der Dauer der Pulse in den Ausgangssignalen und der Pulshöhe der Rechteckpulse abgelegt sein, entweder in Form einer Formel oder tabellarisch.

Durch Bereitstellen einer geeigneten Einrichtung zum Messen der an der Sekundärwicklung zwischen deren erstem und zweitem Ende abfallenden Spannung und dazu einer Einrichtung zum Auswerten der so gewonnen Messwerte, können Mittel zum Öffnen der Schalter in den Primärleitungen des Fehlerstromschutzschalters zum Öffnen dieser Schalter veranlasst werden, wenn die Einrichtung zum Auswerten bei einer Auswertung zumindest eines Messwerts das Erfülltsein eines vorbestimmten Kriteriums, nämlich eben eines Auslösekriteriums, erfasst. Wie oben bereits dargestellt, kann aus der gemessenen Spannung an der Sekundärwicklung unmittelbar auf die Induktivität der Sekundärwicklung zurückgeschlossen werden. Ein Fehlerstrom bewirkt eine Änderung dieser Induktivität in definierter Weise, so dass die Einrichtung zum Auswerten unmittelbar erfassen kann, wie groß die Stromstärke des Fehlerstroms ist. Überschreitet selbige einen vorbestimmten Wert, wird typischerweise der Fehlerstromschutzschalter ausgelöst. Eine Auslöseschwelle kann durch Beeinflussung der Mittel zum Auswerten, z.B. elektronische Eingabe von Daten, auch über Bedienelemente am Fehlerstromschutzschalter, variabel festgelegt werden.

Nachfolgend wird eine bevorzugte Ausführungsform der Erfindung unter Bezug auf die Zeichnung beschrieben, wobei
- FIG 1: in schematischer Darstellung die zur Beschreibung der Erfindung wesentlichen Bauteile eines Fehlerstromschutzschalters zeigt,
- FIG 2: den zeitlichen Verlauf der an einer Impedanz im Fehlerstromschutzschalter aus FIG 1 abfallenden Spannung, welche proportional zu einem durch eine Sekundärwicklung im Fehlerstromschutzschalter fließenden Strom ist, zeigt,
- FIG 3: eine einem Komparator des Fehlerstromschutzschalters aus FIG 1 zugeführte weitere Eingangsspannung zeigt,
- FIG 4: eine Ausgangsspannung des Komparators zeigt, dem die Spannungen aus Figuren 2 und 3 als Eingangsspannungen zugeführt werden,
- FIG 5: eine der FIG 2 entsprechende Darstellung ist, die die Situation ohne eine erfindungsgemäße Regelung bei einem Fehlerstrom veranschaulicht,
- FIG 6: der FIG 3 entspricht,
- FIG 7: eine der FIG 4 entsprechende Darstellung, die die Situation ohne eine erfindungsgemäße Regelung bei einem Fehlerstrom veranschaulicht.

Ein im Ganzen mit 10 bezeichneter Fehlerstromschutzschalter weist Anschlusspaare 12a, 12b, 14a, 14b auf, die mit (nicht gezeigten) Netzleitungen koppelbar sind. Die beiden Anschlüsse eines Anschlusspaares sind jeweils über einen Primärleiter 16 bzw. 18 miteinander gekoppelt, wobei in dem Primärleiter eine Unterbrechung durch einen Schalter 20 bzw. 22 vorgesehen ist. Sind Netzleitungen an den Anschlüssen 12a, 12b, 14a und 14b angeschlossen, so sind im Regelfall die Schalter 20 und 22 geschlossen, damit Strom über die Netzleitungen fließen kann. Aufgabe des Fehlerstromschutzschalters 10 ist es, die Schalter 20, 22 zu öffnen, wenn ein Fehlerstrom fließt. Ein Fehlerstrom ist ein Strom, der über einen der Primärleiter 16 und 18 fließt, über den anderen der Primärleiter 16 und 18 aber nicht zurückfließt. Das Öffnen der Schalter 20 und 22 erfolgt mittels eines Schaltschlosses 24.

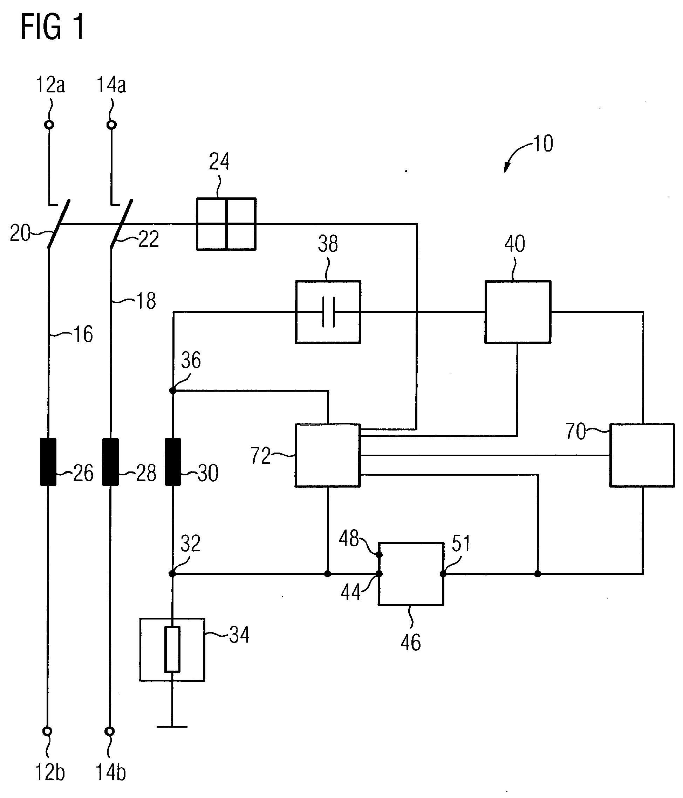

Eine Erfassung, ob ein Fehlerstrom fließt, erfolgt vorliegend mittels eines Summenstromwandlers. Hierzu sind die Primärleitungen 16 und 18 als Primärwicklungen 26 bzw. 28 über einen in FIG 1 nicht gezeigten Magnetkern gewickelt. Über denselben Magnetkern ist eine Sekundärwicklung 30 gewickelt. Die Primärwicklungen 26 und 28 sind derart ausgestaltet und angeordnet, dass das von einem über den Primärleiter 16 in einer Richtung fließenden Strom erzeugte Magnetfeld durch das von dem gleichzeitig über die Primärleitung 18 zurückfließenden selben Strom erzeugte Magnetfeld ausgeglichen wird. Dann wird in der Sekundärwicklung 30 kein Magnetfeld erzeugt. Sobald Strom über eine der Primärleitungen 16 und 18 fließt und über die jeweils andere nicht, wird das in den Magnetkern eingetragene Magnetfeld geändert, so dass sich die Induktivität der Sekundärspule 30 ändert.

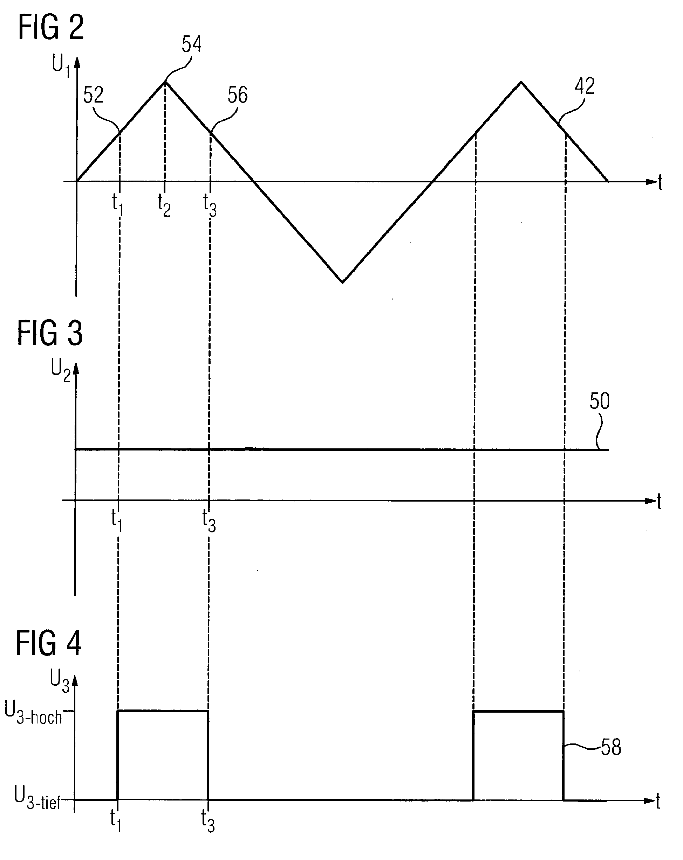

Bei dem Fehlerstromschutzschalter 10 wird vorliegend das Prinzip der gesteuerten Induktion verwendet. Ein Ende 32 der Sekundärwicklung ist über eine Impedanz 34 mit Masse gekoppelt. Das andere Ende 36 der Sekundärwicklung 30 ist über einen Filter 38, der als kapazitives Element ausgebildet sein kann, mit einem Rechteckgenerator 40 gekoppelt. Der Rechteckgenerator 40 beaufschlagt die Serienschaltung aus Sekundärspule 30 und Impedanz 34 mit Rechteckpulsen. Die Rechteckpulse bewirken nun, dass ein Strom über die Sekundärspule 30 und die Impedanz 34 fließt, dessen Stromstärke während eines Rechteckpulses konstant steigt, und während einer genauso lang wie der Rechteckpuls dauernden Pulspause genauso wieder konstant sinkt, mit selbem Betrag der zeitlichen Ableitung. Das Verhalten des Stroms spiegelt sich wieder im Potential am Ende 32 der Sekundärspule, also in der an der Impedanz 34 gegenüber Masse abfallenden Spannung U₁, deren zeitlicher Verlauf anhand der Kurve 42 in FIG 2 dargestellt ist. Die Spannung U₁ ist hierbei proportional zum fließenden Strom.

Diese Spannung U₁ wird nun einem Eingang 44 eines im Ganzen mit 46 bezeichneten Komparators zugeführt. An dem zweiten Eingang 48 des Komparators wird eine konstante Spannung U₂ entsprechend der Kurve 50 in FIG 3 zugeführt. Der Komparator gibt nun einen logisch hohen Wert aus, wenn die Spannung U₁ größer als U₂ ist, und er gibt einen logisch niedrigen Wert aus, wenn die Spannung kleiner als U₂ ist. Wenn in der Kurve 42 daher die Spannung U₁ ansteigt, erreicht sie den Punkt 52, ab dem die Spannung U₁ die Spannung U₂ überschreitet. Zu diesem Zeitpunkt P₁ springt dann die Spannung U₃ von einem logisch tiefen Wert U_{3-tief} auf einen logisch hohen Wert U_{3-hoch}. Zum Zeitpunkt t₂ ist der Rechteckpuls beendet, und die Spannung U₁ hat den Punkt 54 in der Kurve 42 erreicht. Sodann sinkt die Spannung U₁ wieder, bis sie zum Zeitpunkt t₃ den Punkt 56 erreicht, an dem U₁ wieder gerade genau gleich U₂ ist. Zum Zeitpunkt t₃ springt dann die Ausgangsspannung U₃ am Komparator 46 wieder auf den Wert U_{3-tief} herab. Insgesamt ergibt sich die in FIG 4 gezeigte Kurve 58 für das Potential am Ausgang 51 des Komparators 46.

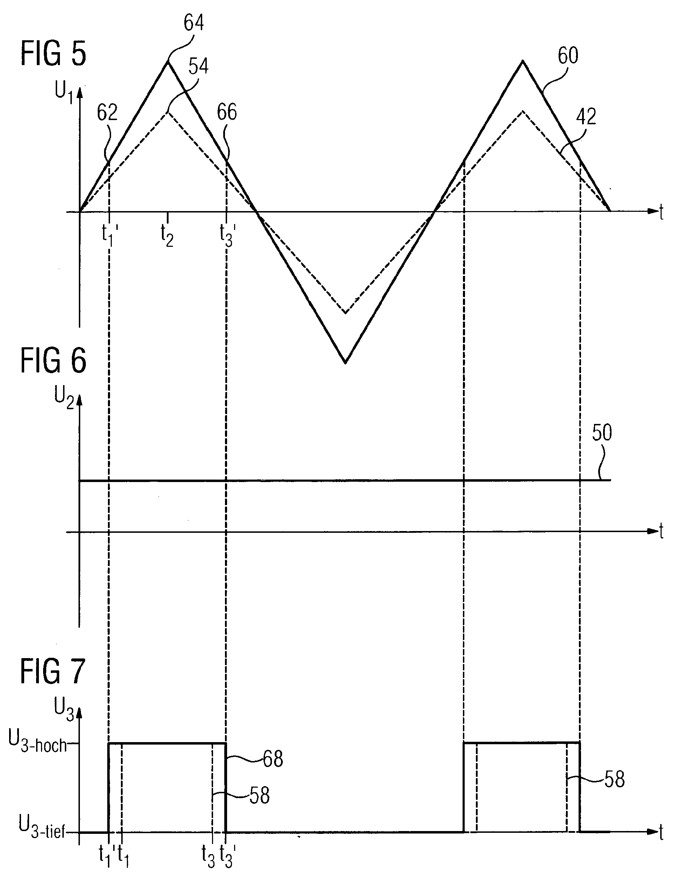

Eigenschaft des Fehlerstromschutzschalters 10 ist es, dass eine Regelung dahingehend erfolgt, dass die Kurve 42 stets wieder durchlaufen wird, also die zeitliche Ableitung des Stroms einen konstanten Betrag hat. Es sei zunächst erläutert, was im Falle eines Fehlerstroms ohne eine solche Regelung passieren wird: Wenn ein Fehlerstrom auftritt, wird, wie oben beschrieben, der Magnetkern mit einem zusätzlichen Magnetfeld beaufschlagt. Dadurch ändert sich die Induktivität der Sekundärspule 30. Die Rechteckpulse, welche der Rechteckgenerator 40 abgibt, würden ohne weitere Maßnahmen nun bewirken, dass sich die Stromstärke ändert. FIG 5 zeigt anhand der Kurve 60, wie der Verlauf der Stromstärke und daher auch der zu dieser proportionalen Spannung U₁ in einem solchen Fall aussehen könnte. Nach wie vor ist die zeitliche Änderung des Stroms während eines Pulses konstant, anhand der Kurve 60 ist aber zu sehen, dass diese zeitliche Veränderung größer ist, als ohne Fehlerstrom. Während eines Rechteckpulses, der die gleiche Pulshöhe hätte wie bei der Kurve 42, würde beim Erreichen eines Punktes 62 zum Zeitpunkt t₁' eine Spannung U₁ erreicht, die größer als U₂ gemäß der Kurve 50 ist. Daher würde U₃ zu einem Zeitpunkt t₁', welcher vor dem Zeitpunkt t₁ läge, von U_{3-tief} auf U_{3-hoch} springen. Der Zeitpunkt t₂, bei dem der Puls endet, ist gleich, und daher kehrt auch bei der Kurve 60 wie bei der Kurve 42 die Kurve um. Da die Spannungsspitze im Punkt 64 höher liegt als die Spannungsspitze beim Punkt 54, dauert es auch trotz der größeren zeitlichen Ableitung länger, bis die Spannung U₁ im Punkt 66 wieder auf den Wert von U₂ gemäß der Kurve 50 abgefallen ist. Daher springt die Spannung U₃ erst zu einem Zeitpunkt t₃' , der auf den Zeitpunkt t₃ folgt, auf U_{3-tief} herunter. Somit ergibt sich die in FIG 7 mit durchgezogener Linie gezeigte Kurve 68.

Es kann nun aus der Dauer, über die sich U₃ auf dem Wert U_{3-hoch} befindet, durch eine Auswerteeinheit 70 (FIG 1) ermittelt werden, ob eine Abweichung gegenüber dem Normalzustand vorliegt, denn die Dauer eines solchen Pulses in der Kurve 68 Δt' = t₃'-t₁' ist größer als die Dauer eines Pulses in der Kurve 58 Δt = t₃-t₁.

Nun hängt der Betrag der zeitlichen Änderung des Stroms neben der Induktivität auch von der Höhe der Rechteckpulse ab, die der Rechteckgenerator 40 abgibt. Vorliegend erfolgt nun eine Regelung dahingehend, dass niemals vom Verlauf entsprechend der Kurve 42 abgewichen wird. Dies kann die Auswerteeinheit 70 daran erkennen, dass sich die Pulse am Ausgang 51 des Komparators 46 gemäß der Kurve 58 verhalten. Die Auswerteeinheit 70 muss lediglich die Pulsdauer messen. Die Auswerteeinheit 70 steuert den Rechteckgenerator 40 so an, dass die Pulse am Ausgang 51 des Komparators 46 eine konstante Dauer haben.

Nun wird durch eine Messeinrichtung 72 die Spannung, die zwischen den beiden Enden 32 und 36 der Sekundärspule 30 abfällt, gemessen. Diese Spannung U_{L} ergibt sich gemäß dem Induktionsgesetz zu U_{L} = L·di/dt, wobei L die Induktivität und di/dt die Ableitung der Stromstärke i über die Zeit t ist.

Da nun auf konstantes di/dt geregelt wird, ist U_{L} direkt proportional zur Induktivität L. Ändert sich nun aufgrund eines Fehlerstroms L, so ändert sich U_{L} genauso. Die Änderung ΔU_{L} ist proportional zur Änderung ΔL von L, es gilt also: ΔU_{L} = ΔL · di/dt.

Aufgrund der Messung von U_{L} lässt sich daher besonders leicht auf L rückschließen. Aufgrund der Regelung des Stroms derart, dass seine zeitliche Ableitung einen konstanten Betrag hat, wird der Magnetkern insbesondere nicht in Sättigung gebracht, und ein Fehlerstrom bewirkt eine nennenswerte Änderung ΔL der Induktivität L, die anhand der Änderung ΔU_{L} der Spannung U_{L} ersichtlich ist. Die Messeinheit 72 ist gleichzeitig als Auswerteeinheit ausgestaltet, die das Schaltschloss 24 dazu veranlasst, die Schalter 20, 22 zu öffnen, wenn aufgrund der Größe von ΔL bzw. auch von ΔU_{L} ersichtlich ist, dass ein Fehlerstrom mit einer bestimmten Mindeststromstärke geflossen ist.

Der Rechteckgenerator 40 gibt die Rechteckpulse mit einer Frequenz von 3kHz ab. Diese ist um so viel größer als die typische Netzfrequenz von 50Hz, dass sich sowohl Fehlerströme, die Gleichströme oder gepulste Ströme sind, als auch Wechselfehlerströme in einer Änderung ΔU_{L} der Spannung U_{L} niederschlagen. Der Fehlerstromschutzschalter 10 ist daher allstromsensitiv.

### Bezugszeichenliste

- 10: Fehlerstromschutzschalter
- 12a, 12b; 14a, 14b: Anschlusspaare
- 16, 18: Primärleiter
- 20, 22: Schalter
- 24: Schaltschloss
- 26, 28: Primärwicklungen
- 30: Sekundärwicklung
- 32: Ende der Sekundärwicklung 30
- 34: Impedanz
- 42, 50, 58, 60, 68: Kurven
- 44, 48: Eingänge des Komparators 46
- 46: Komparator
- 52, 54, 56, 62, 64: Punkte
- 70: Auswerteeinheit
- 72: Messeinrichtung

- U₁, U₂, U₃, U_{L}: Spannungen
- t₁, t₂, t₃, t₁', t_{2'}, t₃': Zeitpunkte

## Patentansprüche

1. Verfahren zum Betreiben eines Fehlerstromschutzschalters (10), in dem mit Netzleitungen gekoppelte Primärleitungen (16, 18) durch einen Summenstromwandler geführt sind, an dem eine Sekundärwicklung (30) bereitgestellt ist, die über eine Impedanz (34) mit Masse gekoppelt ist, wobei bei dem Verfahren die Reihenschaltung aus Sekundärwicklung (30) und Impedanz (34) mit einer Rechteckspannung beaufschlagt wird und eine Größe gemessen und ausgewertet wird, wobei bei einem vorbestimmten Auswerteergebnis zumindest eine der Primärleitungen (16, 18) unterbrochen wird, **dadurch gekennzeichnet, dass** die Pulshöhe von Rechteckpulsen der Rechteckspannung auf einen solchen Wert geregelt wird, dass die zeitliche Änderung der Stromstärke des von einem Rechteckpuls in der Sekundärwicklung (30) induzierten Stroms während der Dauer eines Rechteckpulses und/oder während der Dauer einer Pulspause zwischen zwei Rechteckpulsen jeweils einen vorbestimmten Wert hat.

2. Verfahren nach Anspruch 1, bei dem die Größe die an der Sekundärwicklung abfallende Spannung ist und die zumindest eine Primärleitung (16, 18) unterbrochen wird, wenn der Betrag dieser Spannung gemäß einem vorbestimmten Kriterium einen vorbestimmten Wert überschreitet oder gemäß einem vorbestimmten Kriterium einen vorbestimmten Wert unterschreitet.

3. Verfahren nach Anspruch 1 oder 2, bei dem die Frequenz der Rechteckspannung, mit der die Rechteckpulse an der Reihenschaltung angelegt werden, zumindest fünfmal so hoch und bevorzugt zumindest zwanzigmal so hoch wie eine Netzfrequenz einer über die Netzleitungen bereitgestellten Netzspannung ist.

4. Verfahren nach einem der vorliegenden Ansprüche, bei dem die an der Impedanz (34) abfallende Spannung (U₁) abgegriffen und mit einer konstanten Spannung (U₂) verglichen wird und wobei die Dauer des Überschreitens der konstanten Spannung (U₂) durch die an der Impedanz (34) abfallende Spannung (U₁) die Pulshöhe der Rechteckpulse bestimmt.

5. Verfahren nach Anspruch 4, bei dem auf eine vorbestimmte Dauer des Überschreitens geregelt wird, um die zeitliche Änderung der Stromstärke pro Puls und/oder pro Pulspause auf einen vorbestimmten Wert zu regeln.

6. Fehlerstromschutzschalter (10) mit einer Mehrzahl von Paaren von Anschlüssen (12a, 12b; 14a, 14b) für Netzleitungen, wobei die Anschlüsse eines Paars jeweils über einen Primärleiter (16, 18) miteinander verbunden sind, und wobei in zumindest einem Primärleiter (16, 18) ein Schalter (20, 22) zum Unterbrechen der jeweiligen Verbindung vorgesehen ist, und wobei ferner alle Primärleiter (16, 18) über eine Primärseite eines Summenstromwandlers geführt sind, an dessen Sekundärseite eine Sekundärwicklung (30) bereitgestellt ist, die mit einem ersten Ende (32) über eine Impedanz (34) mit einem Massenanschluss gekoppelt ist und mit einem zweiten Ende (36) mit einem Rechteckgenerator (40) gekoppelt ist, wobei ein Spannungsabgriff (32) am ersten Ende mit einer Auswerte- und Steuereinheit (46, 70) gekoppelt ist, **dadurch gekennzeichnet, dass**
die Auswerte- und Steuereinheit (46, 70) mit dem Rechteckgenerator (40) gekoppelt ist, und dazu ausgelegt ist Steuerbefehle zum Festlegen der Pulshöhe von von dem Rechteckgenerator (40) abgegebenen Rechteckpulsen an diesen abzugeben.

7. Fehlerstromschutzschalter nach Anspruch 6, **dadurch gekennzeichnet, dass** die Auswerte- und Steuereinheit einen Komparator (46) umfasst, dem die am ersten Ende (32) abgegriffene Spannung (U₁) sowie eine konstante Spannung (U₂) zugeführt werden, und dessen Ausgang (51) mit einer Datenverarbeitungseinheit (70) gekoppelt ist, die die Ausgangssignale des Komparators (46) auszuwerten und in Abhängigkeit davon Steuerbefehle an den Rechteckgenator abzugeben ausgelegt ist.

8. Fehlerstromschutzschalter (10) nach Anspruch 6 oder 7 mit einer Einrichtung (72) zum Messen der an der Sekundärwicklung zwischen deren erstem Ende (32) und deren zweitem Ende (36) abfallenden Spannung, mit einer Einrichtung (72) zum Auswerten der so gewonnenen Messwerte, die mit Mitteln (24) zum Öffnen eines, insbesondere jedes Schalters (20, 22) in einer Primärleitung (16, 18) gekoppelt ist, und dazu ausgelegt ist, bei Erfassen des Erfülltseins eines vorbestimmten Kriteriums bei einer Auswertung zumindest eines Messwerts die Mittel (24) zum Öffnen zum Öffnen der Schalter zu veranlassen.

## Claims

1. Method for operating a residual-current-operated circuit-breaker (10) in which primary lines (16, 18) coupled to mains cables are routed through a summation current transformer on which a secondary winding (30) is provided that is coupled to earth via an impedance (34), wherein the method involves the series circuit comprising secondary winding (30) and impedance (34) having a square-wave voltage applied to it and a variable being measured and evaluated, wherein a predetermined evaluation result prompts at least one of the primary lines (16, 18) to be interrupted, **characterized in that** the pulse height of square-wave pulses of the square-wave voltage is regulated to a value that is such that the change in the current intensity of the current induced in a secondary winding (30) by a square-wave pulse over time has a respective predetermined value over the duration of a square-wave pulse and/or the duration of a pulse pause between two square-wave pulses.

2. Method according to Claim 1, in which the variable is the voltage dropped across the secondary winding and the at least one primary line (16, 18) is interrupted if the absolute value of this voltage exceeds a predetermined value on the basis of a predetermined criterion or falls short of a predetermined value on the basis of a predetermined criterion.

3. Method according to Claim 1 or 2, in which the frequency of the square-wave voltage, at which the square-wave pulses are applied to the series circuit, is at least five times as high and preferably at least twenty times as high as a mains frequency of a mains voltage provided via the mains cables.

4. Method according to one of the preceding claims, in which the voltage (U₁) dropped across the impedance (34) is tapped off and compared with a constant voltage (U₂) and wherein the duration for which the constant voltage (U₂) is exceeded by the voltage (U₁) dropped across the impedance (34) determines the pulse height of the square-wave pulses.

5. Method according to Claim 4, in which regulation is effected for a predetermined duration of the exceeding in order to regulate the change in the current intensity over time per pulse and/or per pulse pause to a predetermined value.

6. Residual-current-operated circuit-breaker (10) having a plurality of pairs of connections (12a, 12b; 14a, 14b) for mains cables, wherein the connections of a pair are each connected to one another via a primary conductor (16, 18), and wherein at least one primary conductor (16, 18) contains a switch (20, 22) for interrupting the respective connection, and wherein additionally all primary conductors (16, 18) are routed via a primary side of a summation current transformer whose secondary side is provided with a secondary winding (30) that has a first end (32) coupled to an earth connection via an impedance (34) and has a second end (36) coupled to a square-wave generator (40), a voltage tap (32) at the first end being coupled to an evaluation and control unit (46, 70), **characterized in that**
the evaluation and control unit (46, 70) is coupled to the square-wave generator (40) and is designed to output control commands for stipulating the pulse height of square-wave pulses that are output by the square-wave generator (40) to the latter.

7. Residual-current-operated circuit-breaker according to Claim 6, **characterized in that** the evaluation and control unit comprises a comparator (46) that is supplied with the voltage (U₁) tapped off at the first end (32) and with a constant voltage (U₂) and whose output (51) is coupled to a data processing unit (70) that is designed to evaluate the output signals from the comparator (46) and to output control commands to the square-wave generator on the basis thereof.

8. Residual-current-operated circuit-breaker (10) according to Claim 6 or 7 having a device (72) for measuring the voltage dropped across the secondary winding between the first end (32) thereof and the second end (36) thereof, having a device (72) for evaluating the measured values obtained in this manner that is coupled to means (24) for opening a, particularly each, switch (20, 22) in a primary line (16, 18) and is designed to prompt the means (24) for opening to open the switches when a predetermined criterion is detected as being met when at least one measured value is evaluated.

## Revendications

1. Procédé de fonctionnement d'un interrupteur différentiel (10) dans lequel des lignes primaires (16, 18) couplées à des câbles de réseau passent par un transformateur de courant totalisateur au niveau duquel est mis à disposition un enroulement secondaire (30) qui est couplé à la masse via une impédance (34), le montage en série composé de l'enroulement secondaire (30) et de l'impédance (34) étant, dans le procédé, soumis à une tension rectangulaire et une grandeur étant mesurée et évaluée, au moins l'une des lignes primaires (16, 18) étant coupée pour un résultat d'évaluation prédéfini, **caractérisé en ce que** la hauteur d'impulsion d'impulsions rectangulaires de la tension rectangulaire est réglée sur une valeur telle que la modification temporelle de l'intensité de courant du courant induit par une impulsion rectangulaire dans l'enroulement secondaire (30) a respectivement une valeur prédéterminée pendant la durée d'une impulsion rectangulaire et/ou pendant la durée d'une pause d'impulsion entre deux impulsions rectangulaires.

2. Procédé selon la revendication 1, selon lequel la grandeur est la tension en chute au niveau de l'enroulement secondaire et l'au moins une ligne primaire (16, 18) est coupée lorsque la valeur de cette tension dépasse une valeur prédéfinie conformément à un critère prédéfini ou tombe en dessous d'une valeur prédéfinie conformément à un critère prédéfini.

3. Procédé selon la revendication 1 ou 2, selon lequel la fréquence de la tension rectangulaire avec laquelle les impulsions rectangulaires sont appliquées au montage en série est au moins cinq fois et préférentiellement au moins vingt fois plus importante qu'une fréquence de réseau d'une tension de réseau fournie via les lignes de réseau.

4. Procédé selon l'une des revendications précédentes, selon lequel la tension (U₁) en chute au niveau de l'impédance (34) est prélevée et est comparée avec une tension constante (U₂), et la durée du dépassement de la tension constante (U₂) par la tension (U₁) en chute au niveau de l'impédance (34) déterminant la hauteur d'impulsion des impulsions rectangulaires.

5. Procédé selon la revendication 4, selon lequel le réglage est effectué sur une durée prédéfinie du dépassement pour régler sur une valeur prédéfinie la modification temporelle de l'intensité de courant par impulsion et/ou par pause d'impulsion.

6. Interrupteur différentiel (10) comportant une pluralité de paires de connexions (12a, 12b ; 14a, 14b) pour câbles de réseau, les connexions d'une paire étant reliées entre elles respectivement via un conducteur primaire (16, 18), et un interrupteur (20, 22) étant prévu dans au moins un conducteur primaire (16, 18) pour couper la liaison respective, et, en outre, tous les conducteurs primaires (16, 18) passant par un côté primaire d'un transformateur de courant totalisateur sur le côté secondaire duquel est mis à disposition un enroulement secondaire (30) qui est couplé à un raccordement à la masse via une impédance (34) en une première extrémité (32) et à un générateur de signaux rectangulaires (40) en une deuxième extrémité (36), une prise de tension (32) étant couplée, en la première extrémité, à une unité d'évaluation et de commande (46, 70), **caractérisé en ce que** l'unité d'évaluation et de commande (46, 70) est couplée au générateur de signaux rectangulaires (40) et est conçue pour délivrer au générateur de signaux rectangulaires (40) des commandes pour fixer la hauteur d'impulsion d'impulsions rectangulaires délivrées par le générateur de signaux rectangulaires (40).

7. Interrupteur différentiel (10) selon la revendication 6, **caractérisé en ce que** l'unité d'évaluation et de commande comprend un comparateur (46) auquel sont amenées la tension (U₁) prélevée à la première extrémité (32) ainsi qu'une tension constante (U₂), et dont la sortie (51) est couplée à une unité de traitement de données (70) qui est conçue pour évaluer les signaux de sortie du comparateur (46) et délivrer des commandes au générateur de signaux rectangulaires en fonction de cela.

8. Interrupteur différentiel (10) selon la revendication 6 ou 7, comportant un dispositif (72) pour mesurer la tension en chute au niveau de l'enroulement secondaire entre sa première extrémité (32) et sa deuxième extrémité (36), un dispositif (72) pour évaluer les valeurs de mesure ainsi obtenues, lequel est couplé à des moyens (24) pour ouvrir un et plus particulièrement chaque interrupteur (20, 22) dans une ligne primaire (16, 18), et qui est conçu pour faire en sorte que, en cas de détection de la satisfaction d'un critère prédéfini lors d'une évaluation d'au moins une valeur de mesure, les moyens d'ouverture (24) ouvrent les interrupteurs.
